# EUROPÄISCHE PATENTSCHRIFT

(11) **EP 3 956 136 B1**
(45) Veröffentlichungstag und Bekanntmachung des Hinweises auf die Patenterteilung: **11.12.2024**
(21) Anmeldenummer: 20728382.1
(22) Anmeldetag: 20.04.2020
(51) Int. Cl.: B32B 5/02, B32B 5/18, B32B 5/24, B32B 9/00, H01M 10/613, H01M 10/65

(54) **TASCHE**
BAG
POCHETTE

(30) Priorität: 18.04.2019 AT 503622019
(43) Veröffentlichungstag der Anmeldung: 23.02.2022
(73) Patentinhaber: Veigl, Michael Friedhelm, 3314 Strengberg (AT); GENIUS Patentverwertung GmbH & Co. KG, 15834 Rangsdorf (DE)
(72) Erfinder: VEIGL, Michael Friedhelm, 3314 Strengberg (AT)
(74) Vertreter: Jell, Friedrich
(86) Internationale Anmeldenummer: PCT/AT2020/060159
(87) Internationale Veröffentlichungsnummer: WO 2020/210857

(56) Entgegenhaltungen:
- EP-A1- 3 263 793
- DE-U1- 202012 003 810
- US-A1- 2009 246 485
- DATABASE WPI Week 201673, Derwent World Patents Index; AN 2016-65364F, XP002799722

## Beschreibung

### Technisches Gebiet

Die Erfindung betrifft eine Tasche mit einer Taschenwand aus einem flexiblen Laminat, das einen Dämmschichtbildner aufweist, und mit einem die Taschenwand verschließbaren Verschluss.

### Stand der Technik

Feuerfeste Taschen für Mobiltelefone sind beispielsweise aus der CN204796963U bekannt. Die Taschenwand derartiger Taschen weist hierzu ein Laminat aus verschiedensten Materialien auf, unter anderem auch eine Schicht aus einem Dämmschichtbildner, um damit einen Brand einzudämmen. Nachteilig sind derartige Taschen mit einem vielschichtigen Laminat als Taschenwand und so vergleichsweise wärmeisolierend. Dies erhöht insbesondere die Gefahr einer Überhitzung einer in der Tasche aufgenommen und zu ladenden Batterie. Außerdem sind derartige Laminate vergleichsweise aufwendig in der Herstellung und durch eine hohe Anzahl an aufeinanderfolgenden Schichten vergleichsweise unflexibel, was die Handhabbarkeit der Tasche erschwert.

Des Weiteren ist aus der DE 20212 003810 U1 ein wärmeleitendes Verbundelement bekannt, umfassend wenigstens einen expandierten Graphit enthaltenden Formkörper sowie wenigstens ein auf wenigstens einer Seite des Formkörpers angeordnetes textiles Flächengebilde, wobei das wenigstens eine textile Flächengebilde mit dem Formkörper über einen anorganischen Klebstoff verbunden ist. Diese Vorrichtung ist zur Verwendung in einer Flächenkühlung oder in einer Flächenheizung vorgesehen.

### Darstellung der Erfindung

Die Erfindung hat sich daher die Aufgabe gestellt, eine Tasche der eingangs geschilderten Art derart konstruktiv zu verändern, dass trotz standfestem Brandschutz der Tasche die Gefahr einer Überhitzung beim Laden der Batterie gering ist. Zudem soll die Tasche konstruktiv einfach aufgebaut und einfach zu handhaben sein.

Die Erfindung löst die gestellte Aufgabe durch die Merkmale des Anspruchs 1.

Weist das Laminat als Träger ein flexibles Gewebe auf, das mit dem Dämmschichtbildner beschichtet ist, kann eine vergleichsweise flexible und dünne Taschenwand geschaffen werden, die dennoch eine hohe Brandbeständigkeit aufweist. So kann nämlich das Gewebe bei einem Aufschäumen des Dämmschichtbildners diesem flexibel folgen und damit den Brand in der Tasche lokal einschließen. Dies zudem auch deutlich temperaturfest, wenn das Gewebe ein Glasfasergewebe ist. Hierzu kann beispielsweise auch der aufschäumende Dämmschichtbildner eine Basis auf Blähgraphit aufweisen.

Neben der hohen Brandsicherheit der erfindungsgemäßen Tasche kann auch jenes Gewebe mit einem nicht aufgeschäumten Dämmschichtbildner eine hohe Wärmedurchlässigkeit aufweisen und damit auch eine Brandgefahr beispielsweise beim Laden vermeiden. Die erfindungsgemäße Tasche ist daher besonders als Behälter für Waren, vorzugsweise von Waren mit Batterien oder Batterien geeignet, insbesondere zum Transportieren derselbigen.

Vorzugsweise ist die Tasche eine Ladetasche. Die Tasche kann auch jede beliebige Form aufweisen, beispielsweise die Form eines Etuis, die Form einer Box etc..

Die Brandbeständigkeit kann noch weiter erhöht werden, wenn das Gewebe den Dämmschichtbildner auf der Innenseite der Tasche aufweist. Zudem kann mit dieser Innenlage des Dämmschichtbildners die Reaktionsgeschwindigkeit der Tasche zur Brandbekämpfung deutlich erhöht werden.

Weist das Laminat auf der Innenseite der Tasche eine Folie auf, die den Dämmschichtbildner abdeckt, können die aufgenommenen elektrischen Geräte bzw.

Batterien gegenüber Beschädigungen, wie beispielsweise gegenüber Kratzer, geschützt werden. Zudem kann diese Folie auch den Dämmschichtbildner gegenüber Abrieb bzw. Abtrag durch aufgenommene elektrische Geräte bzw. Batterien schützen, was die Standfestigkeit der Tasche weiter erhöhen kann.

Vorzugsweise weist das Gewebe ein Flächengewicht von 50 bis 500 g/m2, insbesondere von 140 bis 250 g/m2, auf, um eine ausreichende Flexibilität und Festigkeit im Brandfall gewährleisten zu können.

Als ausreichend zur Eindämmung von Bränden kann ermöglicht werden, wenn der Dämmschichtbildner ein Flächengewicht von mindestens 300 g/m2, insbesondere von mindestens 700 g/m2 aufweist.

Vorzugsweise weist das Laminat ein Flächengewicht von maximal 4000 g/m2, insbesondere maximal 2000 g/m2, insbesondere maximal 1200 g/m2, auf, um trotz Brandbeständigkeit eine ausreichende flexible Außenwand für eine einfache Handhabung gewährleisten zu können.

Eine ausreichende Flexibilität des Laminats kann erreicht werden, wenn das Laminat eine Dicke von 0,5 bis 5 mm aufweist.

Ist das Laminat perforiert, kann dies zudem besonderen Einfluss auf die Kühlung einer beispielsweise zu ladenden Batterien nehmen und damit diese vor Überhitzung schützen. Im Brandfall verschließt der aufschäumende Dämmschichtbildner diese Perforierung, wodurch die Tasche trotz Perforation eine hohe Brandbeständigkeit aufweisen kann.

Eine besonders auch im Brandfall standfeste Tasche kann geschaffen werden, wenn die Tasche an den Seitenkanten entlanglaufende Bänder, insbesondere Gurtbänder, aufweist, die das Laminat an der jeweiligen Seitenkante umfassen und mit dem Laminat vernäht sind. So können nämlich durch das mit dem Gewebe des Laminats vernähte Band vergleichsweise hohen Druckkräften des sich aufschäumenden Dämmschichtbildners widerstanden werden. Dies stellt zudem sicher, dass die Tasche sicher gegenüber einen Schaumaustritt ist.

Konstruktive Einfachheit kann erreicht werden, wenn die Taschenwand von einem umgebogenen und damit den Taschenboden formenden Laminat ausgebildet wird.

Hohen Temperaturen kann die Tasche standhalten, wenn die Naht oder generell alle Nähte der Tasche 1 ein brandbeständiges Garn, insbesondere Kevlargarn, aufweist.

Die Gefahr eines Überschlags eines Brands aus der Tasche heraus kann verringert werden, wenn der Verschluss zwei zum Verschließen der Taschenwand zusammenwirkende Leisten, insbesondere Magnetleisten oder Federstahlleisten, aufweist, die am Laminat befestigt sind.

Vorzugsweise weist die Tasche eine Trageschlaufe auf, um auch im Brandfall die Tasche sicher beispielhaft zu einem sicheren Ort transportieren zu können.

Besteht die Trageschlaufe aus einem Gewebeband, insbesondere Gurtband, kann eine hohe Standfestigkeit auch bei vergleichsweise hohen Temperaturen in der Tasche beispielsweise durch einen Brand ausgelöst, getragen werden.

Vorzugsweise ist die Trageschlaufe im Bereich der Taschenöffnung an der Tasche befestigt, um beim Tragen die aufgenommenen Teile, beispielsweise Mobiltelefone, vor einem Herausfallen zu sichern.

Eine besonders im Brandfall standfeste Tasche kann geschaffen werden, wenn die Taschenwand im Bereich der Taschenöffnung zwei gegenüberliegende Wandenden ausbildet, die sich im Bereich der Taschenöffnung überlappen.

Vorstellbar ist weiter, dass der Verschluss ein Reißverschluss oder ein anderes auf Formschluss beruhendes Verschlussmittel aufweist, die Brandbeständigkeit der Tasche zu erhöhen.

Die Konstruktion der Tasche kann vereinfacht werden, wenn der Reißverschluss ein erstes Seitenteil mit ersten Schließgliedern und ein zweites Seitenteil mit zweiten Schließgliedern aufweist, wobei die Seitenteile an der Taschenwand, insbesondere über je eine erste Naht, befestigt und insbesondere an der Außenseite der Tasche vorgesehen sind.

Hierzu kann beispielsweise sich das erste Wandende, an dem das erste Seitenteil befestigt ist, zumindest über die zweiten Schließglieder des zweiten Seitenteils erstrecken.

Vorzugsweise erstreckt sich das zweite Wandende, an dem das zweite Seitenteil befestigt ist, höchstens bis zu den zweiten Schließgliedern.

Ist zumindest ein Seitenteil über eine zweite Naht an der Taschenwand befestigt, wobei die Naht zu den Schließgliedern dieses Seitenteils einen Abstand kleiner der Schließgliederbreite des Reißverschlusses aufweist, kann dies eine Überlappung der Wandenden standfest sicherstellen.

Weist die Taschenwand eine Kabeldurchführung auf, kann dies die Handhabung der Tasche erleichtern. Vorzugsweise ist die Kabeldurchführung auch als Überdruckventil ausgebildet.

### Kurze Beschreibung der Zeichnung

In den Figuren ist beispielsweise der Erfindungsgegenstand anhand mehrerer Ausführungsbeispiele näher dargestellt. Es zeigen
- Fig. 1: eine teilweise aufgerisse Seitensicht auf eine Tasche nach einem ersten Ausführungsbeispiel,
- Fig. 2: eine Schnittansicht der Fig. 1,
- Fig. 3: eine dreidimensionale Ansicht auf die Tasche nach Fig. 1 mit einem anderen Verschluss,
- Fig. 4: eine schematisch dargestellte Schnittansicht auf den Verschluss der Tasche nach Fig. 3,
- Fig. 5: eine Ansicht auf eine gegenüber der Fig. 1 größer ausgeführten Tasche nach einem weiteren Ausführungsbeispiel und
- Fig. 6: eine schematisch dargestellte Schnittansicht auf den Verschluss der Tasche nach Fig. 5.

### Weg zur Ausführung der Erfindung

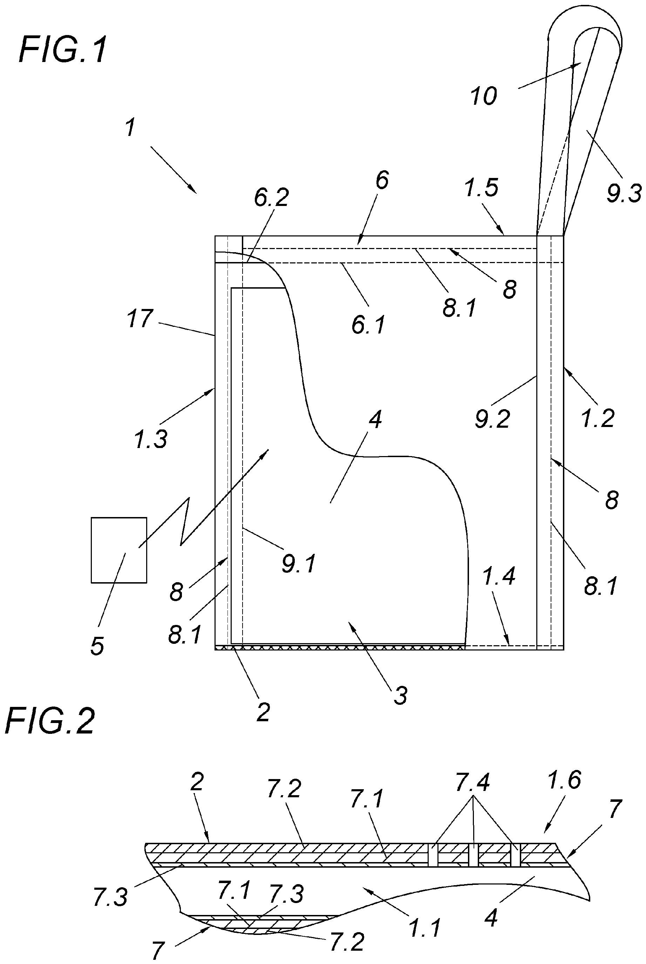

Nach den Figuren 1 bis 4 wird eine Tasche 1 nach einem ersten Ausführungsbeispiel gezeigt. Diese Tasche 1 weist eine Taschenwand 2 auf, die eine Aufnahme 3 für beispielsweise ein Mobiltelefon 4 (als ein Beispiel für eine Waren mit einer Batterie) ausbildet. Das Mobiltelefon 4 wird optional über eine induktive Ladestation 5 durch die Taschenwand 2 hindurchgehend induktiv geladen. In diesem Fall ist die Tasche 1 eine Ladetasche 17.

Über einen Verschluss 6 der Tasche 1 kann ein Zugang zur Aufnahme 3 geschaffen werden bzw. kann damit die Tasche 1 geöffnet oder verschlossen werden. Die Taschenwand 2 besteht aus einem flexiblen Laminat 7, das einen Dämmschichtbildner 7.1 aufweist, wie dies nach Fig. 2 erkannt werden kann.

Erfindungsgemäß wird bei hoher Flexibilität der Taschenwand 2 eine hohe Brandbeständigkeit erreicht, indem das Laminat 7 als Träger ein flexibles Gewebe 7.2, nämlich Glasfasergewebe, aufweist, das mit dem Dämmschichtbildner 7.1 beschichtet ist und damit direkt an das flexible Gewebe 7.2 anschließt.

Wie in der Fig. 2 zu erkennen, weist das Gewebe 7.2 den Dämmschichtbildner 7.1 auf der Innenseite 1.1 der Tasche 1 auf, wodurch ein Brand des Mobiltelefons 4 reaktionsschnell vom Dämmschichtbildner 7.1 eingedämmt wird. Dies, weil der Dämmschichtbildner 7.1 aufschäumend und auf Basis von Blähgraphit ist.

Das Laminat 7 weist zudem auf der Innenseite 1.1 der Tasche 1 eine Folie 7.3 auf, die den Dämmschichtbildner 7.1 vollständig abdeckt. Dies schützt den Dämmschichtbildner 7.1 gegenüber Abrieb und erleichtert auch ein Einschieben eines Mobiltelefons 4 in die Tasche 1.

Vorzugsweise weist die Außenseite 1.6 der Tasche 1 keinen Dämmschichtbildner 7.1 auf bzw. ist das Gewebe 7.2 auf dieser Seite frei vom Dämmschichtbildner 7.1.

Das Gewebe 7.2 weist ein Flächengewicht von 50 bis 500 g/m2, insbesondere von 140 bis 250 g/m2, auf. Der Dämmschichtbildner 7.1 weist ein Flächengewicht von mindestens 300 g/m2, insbesondere von mindestens 700 g/m2 auf. Das Laminat 7 weist ein Flächengewicht von maximal 2500 g/m2, insbesondere maximal 950 g/m2, auf. Zudem weist das Laminat 7 eine Dicke von 0,5 bis 5 mm auf.

Zudem ist das Laminat 7 perforiert, indem in vorzugsweise regelmäßigen Abständen Löcher 7.4 im Laminat 7 vorgesehen sind.

Der Verschluss 6 besteht nach Fig. 1 aus zwei zum Verschließen der Taschenwand 2 zusammenwirkende Leisten 6.1, 6.2, nämlich Magnetleisten oder Federstahlleisten. Diese Leisten 6.1, 6.2 können in Laschen eingebettet sein, was das Laminat 7 ausbildet - nach Fig. 1 sind die Leisten 6.1, 6.2 mit dem Laminat 7 über eine Naht 8 vernäht dargestellt.

Die Tasche 1 ist an den Seitenkanten 1.2, 1.3 verstärkt ausgeführt. Dies mit an den Seitenkanten 1.2, 1.3 entlanglaufendem Gewebeband 9.1, 9.2, nämlich vorzugsweise Gurtbändern. Die Gewebebänder sind um die Seitenkanten 1.2, 1.3 umgeschlagen bzw. umfassen diese und sind mit dem Laminat über eine Naht 8, nämlich in Form eines Geradstichs, vernäht. Für diese Naht 8 oder generell für die anderen Nähte 14, 15 der Tasche 1 wird ein brandbeständiges Garn, nämlich vorzugsweise Kevlargarn, verwendet, was einen standfesten Verbund zwischen Gewebeband 9.1 bzw. 9.2 und flexiblen Gewebe 7.2 des Laminats 7 schafft.

Die Tasche 1 ist auch vergleichsweise einfach konstruktiv aufgebaut. So wird die Taschenwand 2 von einem umgebogenen und damit den Taschenboden 1.4 formenden Laminat 7 ausgebildet. An den Seitenkanten 1.2, 1.3 sind die aufeinanderliegenden Halbseiten des Laminats 7 mit dem jeweiligen Gewebeband 9.1, 9.2 vernäht.

Auf der dem Taschenboden 1.4 gegenüberliegenden Seite ist die Taschenöffnung 1.5 mit dem Verschluss 6 vorgesehen. Die Aufnahme 3 der Tasche 1 ist nur über diese Taschenöffnung 1.5 zugänglich. Im Allgemeinen wird erwähnt, dass die Tasche 1 die Form eines Etuis aufweisen kann.

Wie der Fig. 1 zudem zu entnehmen, weist die Tasche 1 eine Trageschlaufe 10 auf. Die Trageschlaufe 10 besteht aus einem Gewebeband 9.3, nämlich Gurtband. Damit kann die Tasche auch im Brandfall standfest und sicher abgetragen werden. Vorzugsweise ist die Trageschlaufe 10 im Bereich der Taschenöffnung 1.5 an der Tasche 1 befestigt, um im Brandfall dennoch sicher die Tasche tragen zu können. Zudem kann ein Herausfallen beispielsweise der aufgenommenen brennenden Batterie bzw. des Telefons etc. damit standfest vermieden werden.

Vorstellbar ist auch, dass ein Gewebeband 9.1 bzw. 9.2 an einer Seitenkante 1.2 bzw. 1.3 in das Gewebeband 9.2 der Trageschlaufe 10 übergeht.

Vorzugsweise weist das Gewebe 7.2 ein Flächengewicht von 200 g/m2, der Dämmschichtbildner 7.1 ein Flächengewicht von 750g/m² und das Laminat 7 mit Folie ein Flächengewicht von ca. 950g/m². Das Laminat 7 ist 0,7 mm dick. Dies reicht aus, herkömmliche Mobiltelefone in der Tasche 1 sicher aufzunehmen. Beispielsweise hat sich ein Flächengewicht von 500 - 800 g/m² für Batterien bis 5000mAh als ausreichend herausgestellt. Beispielsweise hat sich ein Flächengewicht von 800 - 1400 g/m² für Batterien von 5000 bis 10000 mAh als ausreichend herausgestellt. Beispielsweise hat sich ein Flächengewicht von 1400 - 2400 g/m2 für Batterien von ab 10000 mAh als ausreichend herausgestellt.

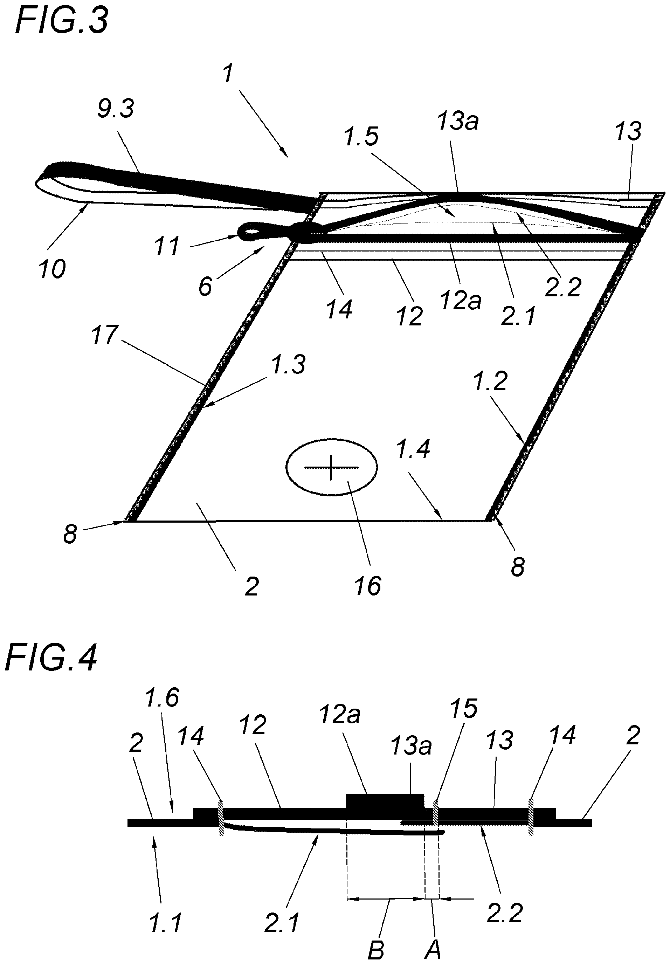

Die Tasche 1 nach Fig. 3 weist einen anderen Verschluss 6 auf, nämlich einen Reißverschluss 11. Der Reißverschluss 11 weist ein erstes Seitenteil 12 erste Schließglieder 12a, nämlich Spiralen, und ein zweites Seitenteil 13 zweite Schließglieder 13a, nämlich auch Spiralen, auf. Die Seitenteile 12 und 13 sind über je eine erste Naht 14 mit der Taschenwand 2 fest verbunden. Diese Nähte 14 befinden sich randseitig an den Seitenteilen 12, 13. Außerdem sind die Seitenteile 12, 13 an der Außenseite 1.6 der Tasche 1 vorgesehen, wie in Fig. 4 zu erkennen.

Die Taschenwand 2 bildet im Bereich der Taschenöffnung 1.5 zwei gegenüberliegende Wandenden 2.1, 2.2 aus, die sich im Bereich der Taschenöffnung 1.5 überlappen. Hierfür erstreckt sich das erste Wandende 2.1, an dem das erste Seitenteil 12 befestigt ist, über die zweiten Schließglieder 13a des zweiten Seitenteils 13, wie in Fig. 4 zu erkennen.

Das zweite Wandende 2.2, an dem das zweite Seitenteil 13 befestigt ist, erstreckt sich bis zu den zweiten Schließgliedern 13a.

Zudem ist das zweite Seitenteil 13 mit einer zweiten Naht 15 an der Taschenwand 2 befestigt. Diese zweite Naht 15 weist zu den Schließgliedern 13a des zweiten Seitenteils 13 einen Abstand A kleiner der Schließgliederbreite B des Reißverschlusses 11 auf. Damit kann eine richtige Überlappung der Wandenden 2.1 und 2.2 sichergestellt werden, indem damit stets das Wandende 2.1 vom Reißverschluss 11 aus gesehen unterhalb des Wandendes 2.2 liegt.

Zudem weist die Tasche 1 nach Fig. 4 eine Kabeldurchführung 16 auf. Die Kabeldurchführung kann beispielsweise durch einen Schnitt in der Taschenwand 2 und einen über den Schnitt vorgehenden vorzugsweise runden Patch, der mit der Taschenwand 2 umlaufend vernäht ist. Über eine beispielsweise x-förmige Öffnung im Patch wird so die Innenseite 1.1 der Tasche 1 zugänglich. Im Brandfall verschließt der Dämmschichtbildner 7.1 den Schnitt in der Taschenwand 2 unterhalb des Patchs, sodass die Kabeldurchführung 16 dicht verschlossen wird.

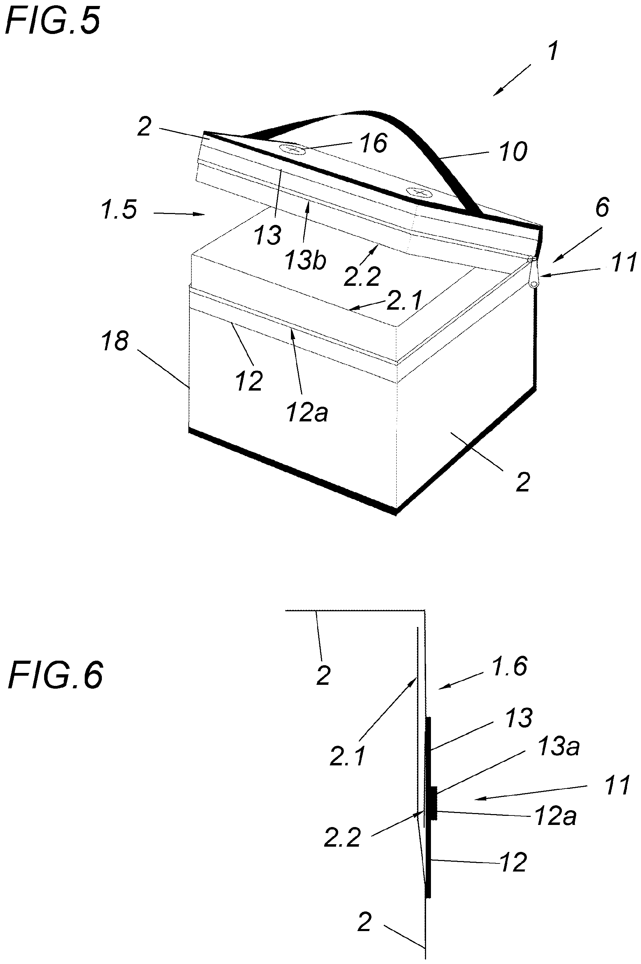

Nach den Figuren 5 und 6 wird eine Tasche 1 nach einem zweiten Ausführungsbeispiel gezeigt. Diese Tasche 1 als Behälter zum Transport von Waren, weist die Form einer Box auf. Auch hier wird als Verschluss 7 ein Reißverschluss 11 verwendet, hinter dem, vom der Außenseite 1.6 der Tasche 1 gesehen, die Wandende 2.1 und 2.2 der Taschenwand 2 überlappen, wie dies insbesondere in der Fig. 6 zu erkennen ist. In die Box kann beispielsweise noch Vermiculite-Kissen und/oder andere Dämmschichtbildner zugegeben werden, einem Brand in der Tasche 1 zu widerstehen oder auch für einen sicheren Transport von Waren sorgen.

Damit kann sich die erfindungsgemäße Tasche insbesondere als Ladetasche und/oder als Tasche zum Gefahrguttransport vorzugsweise von Batterien oder Waren mit Batterien eignen.

## Patentansprüche

1. Tasche mit einer Taschenwand (2) aus einem flexiblen Laminat (7), das einen Dämmschichtbildner (7.1) aufweist, und mit einem eine Taschenöffnung (1.5) der Tasche (1) verschließbaren Verschluss (6), **dadurch gekennzeichnet, dass** das Laminat (7) als Träger ein flexibles Gewebe (7.2), insbesondere Glasfasergewebe, aufweist, das mit dem Dämmschichtbildner (7.1) beschichtet ist und wobei der Dämmschichtbildner (7.1) aufschäumend und auf Basis von Blähgraphit ist.

2. Tasche nach Anspruch 1, **dadurch gekennzeichnet, dass** das Gewebe (7.2) den Dämmschichtbildner (7.1) auf der Innenseite (1.1) der Tasche (1) aufweist.

3. Tasche nach Anspruch 2, **dadurch gekennzeichnet, dass** das Laminat (7) auf der Innenseite (1.1) der Tasche (1) eine Folie aufweist, die den Dämmschichtbildner (7.1) abdeckt.

4. Tasche nach einem der Ansprüche 1 bis 3, **dadurch gekennzeichnet, dass** das Gewebe (7.2) ein Flächengewicht von 50 bis 500 g/m², insbesondere von 140 bis 250 g/m², aufweist und/oder der Dämmschichtbildner (7.1) ein Flächengewicht von mindestens 300 g/m², insbesondere von mindestens 700 g/m², aufweist.

5. Tasche nach Anspruch 4, **dadurch gekennzeichnet, dass** das Laminat (7) ein Flächengewicht von maximal 4000 g/m², insbesondere maximal 2000 g/m², insbesondere maximal 1200 g/m², aufweist.

6. Tasche nach einem der Ansprüche 1 bis 5, **dadurch gekennzeichnet, dass** das Laminat (7) eine Dicke von 0,5 bis 5 mm aufweist und/oder das Laminat (7) perforiert ist.

7. Tasche nach einem der Ansprüche 1 bis 6, **dadurch gekennzeichnet, dass** die Tasche (1) ein an den Seitenkanten (1.2, 1.3) entlanglaufendes Gewebeband (9.1, 9.2), insbesondere Gurtbänder, aufweist, die das Laminat (7) an der jeweiligen Seitenkante (1.2, 1.3) umfassen und mit dem Laminat (7) vernähtist, wobei die Taschenwand (2) insbesondere von einem umgebogenen und damit den Taschenboden (1.4) formenden Laminat (7) ausgebildet wird, wobei die Naht (8) insbesondere ein brandbeständiges Garn (8.1), insbesondere Kevlargarn, aufweist.

8. Tasche nach einem der Ansprüche 1 bis 7, **dadurch gekennzeichnet, dass** die Tasche (1) eine Trageschlaufe (10) aufweist, wobei die Trageschlaufe (10) insbesondere aus einem Gewebeband (9.3), insbesondere Gurtband, besteht, wobei die Trageschlaufe (10) insbesondere im Bereich der Taschenöffnung (1.5) an der Tasche (1) befestigt ist.

9. Tasche nach einem der Ansprüche 1 bis 8, dass die Taschenwand (2) im Bereich der Taschenöffnung (1.5) zwei gegenüberliegende Wandenden (2.1, 2.2) ausbildet, die sich im Bereich der Taschenöffnung (1.5) überlappen.

10. Tasche nach einem der Ansprüche 1 bis 9, **dadurch gekennzeichnet, dass** der Verschluss (6) ein Reißverschluss (11) oder ein anderes auf Formschluss beruhendes Verschlussmittel aufweist.

11. Tasche nach Anspruch 10, **dadurch gekennzeichnet, dass** der Reißverschluss (11) ein erstes Seitenteil (12) mit ersten Schließgliedern (12a) und ein zweites Seitenteil (13) mit zweiten Schließgliedern (13a) aufweist, wobei die Seitenteile (12, 13) an der Taschenwand (2), insbesondere über je eine erste Naht (14), befestigt und insbesondere an der Außenseite (1.6) der Tasche (1) vorgesehen sind.

12. Tasche nach Anspruch 11, **dadurch gekennzeichnet, dass** das erste Wandende (2.1), an dem das erste Seitenteil (12) befestigt ist, sich zumindest über die zweiten Schließglieder (13a) des zweiten Seitenteils (13) erstreckt.

13. Tasche nach einem der Ansprüche 11 bis 12, **dadurch gekennzeichnet, dass** das zweite Wandende (2.2), an dem das zweite Seitenteil (13) befestigt ist, sich höchstens bis zu den zweiten Schließgliedern (13a) erstreckt.

14. Tasche nach einem der Ansprüche 11 bis 13, **dadurch gekennzeichnet, dass** zumindest ein Seitenteil (13) über eine zweite Naht (15) an der Taschenwand (2) befestigt ist, wobei die Naht (15) zu den Schließgliedern (13a) dieses Seitenteils (13) einen Abstand (A) kleiner der Schließgliederbreite (B) des Reißverschlusses (11) aufweist.

15. Verwendung einer Tasche (1) nach einem der Ansprüche 1 bis 14 als Ladetasche und/oder als Gefahrguttransporttasche vorzugsweise von Batterien oder Waren mit Batterien.

## Claims

1. Bag having a bag wall (2) made of a flexible laminate (7) which has an insulating layer-forming component (7.1), and having a closure (6) which can close a bag opening (1.5) of the bag (1), **characterized in that** the laminate (7) has as carrier a flexible fabric (7.2), more particularly glass fiber fabric, which is coated with the insulating layer-forming component (7.1), and wherein the insulating layer-forming component (7.1) is intumescent and based on expandable graphite.

2. Bag according to claim 1, **characterized in that** the fabric (7.2) has the insulating layer-forming component (7.1) on the inside (1.1) of the bag (1).

3. Bag according to claim 2, **characterized in that** the laminate (7) has a film on the inside (1.1) of the bag (1) which covers the insulating layer-forming component (7.1).

4. Bag according to one of claims 1 to 3, **characterized in that** the fabric (7.2) has a basis weight of 50 to 500 g/m², more particularly 140 to 250 g/m², and/or the insulating layer-forming component (7.1) has a basis weight of at least 300 g/m², more particularly at least 700 g/m².

5. Bag according to claim 4, **characterized in that** the laminate (7) has a basis weight of at most 4000 g/m², more particularly at most 2000 g/m², more particularly at most 1200 g/m².

6. Bag according to one of claims 1 to 5, **characterized in that** the laminate (7) has a thickness of 0.5 to 5 mm and/or the laminate (7) is perforated.

7. Bag according to one of claims 1 to 6, **characterized in that** the bag (1) has a fabric band (9.1, 9.2), more particularly webbings, extending along the side edges (1.2, 1.3), which encloses the laminate (7) at the respective side edge (1.2, 1.3) and is sewn to the laminate (7), wherein the bag wall (2) is formed more particularly by a laminate (7) which is bent over and thus forms the bag bottom (1.4), wherein the seam (8) comprises more particularly a fire-resistant yarn (8.1), more particularly Kevlar yarn.

8. Bag according to one of claims 1 to 7, **characterized in that** the bag (1) has a carrying loop (10), wherein the carrying loop (10) consists more particularly of a fabric band (9.3), more particularly a webbing, wherein the carrying loop (10) is fastened to the bag (1) more particularly in the region of the bag opening (1.5).

9. Bag according to one of claims 1 to 8, in that the bag wall (2) forms two opposite wall ends (2.1, 2.2) in the region of the bag opening (1.5), which overlap in the region of the bag opening (1.5).

10. Bag according to one of claims 1 to 9, **characterized in that** the closure (6) comprises a zipper fastener (11) or another closure means based on positive closure.

11. Bag according to claim 10, **characterized in that** the zipper fastener (11) has a first side part (12) with first closing members (12a) and a second side part (13) with second closing members (13a), wherein the side parts (12, 13) are fastened to the bag wall (2), more particularly via a first seam (14) in each case, and are provided more particularly on the outside (1.6) of the bag (1).

12. Bag according to claim 11, **characterized in that** the first wall end (2.1), to which the first side part (12) is attached, extends at least over the second closing members (13a) of the second side part (13).

13. Bag according to one of claims 11 to 12, **characterized in that** the second wall end (2.2), to which the second side part (13) is attached, extends at most as far as the second closing members (13a).

14. Bag according to one of claims 11 to 13, **characterized in that** at least one side part (13) is fastened to the bag wall (2) via a second seam (15), wherein the seam (15) has a distance (A) from the closing members (13a) of this side part (13) that is smaller than the closing member width (B) of the zipper fastener (11).

15. Use of a bag (1) according to one of claims 1 to 14 as a cargo bag and/or as a bag for transporting hazardous goods, preferably batteries or goods with batteries.

## Revendications

1. Sac possédant une paroi de sac (2) faite d'un stratifié flexible (7) qui comprend un agent formant une couche isolante (7.1) et une fermeture (6) qui peut fermer une ouverture de sac (1.5) du sac (1), **caractérisé en ce que** le stratifié (7) servant de support comporte une toile flexible (7.2), en particulier une toile de verre, qui est revêtue de l'agent formant une couche isolante (7.1), dans lequel l'agent formant une couche isolante (7.1) est un agent moussant et à base de graphite expansé.

2. Sac selon la revendication 1, **caractérisé en ce que** la toile (7.2) présente l'agent formant une couche isolante (7.1) sur la face intérieure (1.1) du sac (1).

3. Sac selon la revendication 2, **caractérisé en ce que** le stratifié (7) présente sur la face intérieure (1.1) du sac (1) un film qui couvre l'agent formant une couche isolante (7.1).

4. Sac selon l'une des revendications 1 à 3, **caractérisé en ce que** la toile (7.2) a un poids par unité de surface de 50 à 500 g/m², en particulier de 140 à 250 g/m², et/ou l'agent formant une couche isolante (7.1) a un poids par unité de surface d'au moins 300 g/m², en particulier d'au moins 700 g/m².

5. Sac selon la revendication 4, **caractérisé en ce que** le stratifié (7) a un poids par unité de surface de 4000 g/m² au maximum, en particulier 2000 g/m² au maximum, en particulier de 1200 g/m² au maximum.

6. Sac selon l'une des revendications 1 à 5, **caractérisé en ce que** le stratifié (7) est épais de 0,5 à 5 mm et/ou le stratifié (7) est perforé.

7. Sac selon l'une des revendications 1 à 6, **caractérisé en ce que** le sac (1) comporte une bande de toile (9.1, 9.2) courant le long de ses bords latéraux (1.2, 1.3), qui entoure le stratifié (7) sur le bord latéral (1.2, 1.3) correspondant et qui est cousue au stratifié (7), la paroi de sac (2) étant en particulier formée par un stratifié (7) incurvé et formant le fond du sac (1.4), la couture (8) comprenant en particulier un fil ignifuge (8.1), en particulier un fil de kevlar.

8. Sac selon l'une des revendications 1 à 7, **caractérisé en ce que** le sac (1) comporte une bandoulière (10), laquelle bandoulière (10) se compose d'une bande de toile (9.3), en particulier d'une sangle, la bandoulière (10) étant en particulier fixée au sac (1) dans la région de l'ouverture du sac (1.5).

9. Sac selon l'une des revendications 1 à 8, **caractérisé en ce que** la paroi de sac (2) forme dans la région de l'ouverture du sac (1.5) deux extrémités de paroi (2.1, 2.2) qui se font face et se chevauchent dans la région de l'ouverture du sac (1.5).

10. Sac selon l'une des revendications 1 à 9, **caractérisé en ce que** la fermeture (6) comporte une fermeture à glissière (11) ou un autre moyen de fermeture faisant appel à un engagement positif.

11. Sac selon la revendication 10, **caractérisé en ce que** la fermeture à glissière (11) comporte une première partie latérale (12) avec des premiers maillons de fermeture (12a) et une deuxième partie latérale (13) avec des deuxièmes maillons de fermeture (13a), les parties latérales (12, 13) étant fixées sur la paroi de sac (2), en particulier chacune par une première couture (14), et en particulier sur la face extérieure (1.6) du sac (1).

12. Sac selon la revendication 11, **caractérisé en ce que** la première extrémité de paroi (2.1), sur laquelle est fixée la première partie latérale (12), s'étend au-moins par-dessus les deuxièmes maillons de fermeture (13a) de la deuxième partie latérale (13).

13. Sac selon l'une des revendications 11 à 12, **caractérisé en ce que** la deuxième extrémité de paroi (2.2), sur laquelle est fixée la deuxième partie latérale (13), s'étend au maximum jusqu'aux deuxièmes maillons de fermeture (13a).

14. Sac selon l'une des revendications 11 à 13, **caractérisé en ce qu'**au moins une partie latérale (13) est fixée par une deuxième couture (15) sur la paroi de sac (2), la couture (15) présentant par rapport aux maillons de fermeture (13a) de cette partie latérale (13) une distance (A) inférieure à la largeur des maillons de fermeture (B) de la fermeture à glissière (11).

15. Utilisation d'un sac (1) selon l'une des revendications 1 à 14 comme sac de mise en charge et/ou comme sac de transport de matières dangereuses, de préférence de piles ou d'articles contenant des piles.
